# FASCICULE DE BREVET EUROPEEN

(11) **EP 2 666 719 B1**
(45) Date de publication et mention de la délivrance du brevet: **02.08.2017**
(21) Numéro de dépôt: 13002572.9
(22) Date de dépôt: 16.05.2013
(51) Int. Cl.: B64C 27/26

(54) **Procédé de commande des volets d'ailes et de l'empennage horizontal d'un hélicoptère hybride**
Verfahren zur Steuerung der Flügelklappen und des horizontalen Leitwerks eines Hybridhelikopters
Method for controlling the wing flaps and the horizontal tail of a hybrid helicopter

(30) Priorité: 21.05.2012 FR 1201431
(43) Date de publication de la demande: 27.11.2013
(73) Titulaire: Airbus Helicopters, 13725 Marignane Cedex (FR)
(72) Inventeur: Eglin, Paul, 13830 Roquefort LA Bedoule (FR)
(74) Mandataire: Pouillot, Laurent Pierre Paul

(56) Documents cités:
- WO-A2-2005/005250
- FR-A1- 2 916 420
- US-A1- 2008 237 392
- US-B2- 8 113 460

## Description

La présente invention se rapporte au domaine technique de la mécanique du vol d'un aéronef à voilure tournante. Elle concerne un procédé de commande d'un tel aéronef en phase de vol à vitesse élevée et stabilisée. Elle concerne également un dispositif de commande d'un tel aéronef.

Ce procédé et ce dispositif sont plus particulièrement destinés aux hélicoptères hybrides, c'est-à-dire aux aéronefs à voilure tournante équipés d'une propulsion auxiliaire.

L'aéronef à voilure tournante comporte classiquement au moins un rotor principal, assurant à la fois la sustentation et la propulsion de l'aéronef, un fuselage et une motorisation.

L'hélicoptère hybride comporte de plus au moins une hélice propulsive ainsi qu'une surface sustentatrice, généralement composée de deux demi-ailes situées de part et d'autre du fuselage et d'un empennage horizontal positionné à une extrémité de l'aéronef.

Par exemple, deux hélices propulsives à pas variable sont positionnées de part et d'autre du fuselage, sur chaque demi-aile.

De plus, chaque demi-aile peut être équipée d'au moins un volet mobile permettant de modifier la portance de chaque demi-aile. De même, l'empennage horizontal comporte au moins une surface mobile afin de modifier la portance de l'empennage horizontal. Cette surface mobile peut être constituée par une gouverne de profondeur ou par l'empennage horizontal dans son intégralité.

La fonction principale des deux demi-ailes est une participation à la sustentation de l'hélicoptère hybride en vol à vitesse d'avancement élevée, la ou les hélices propulsives permettant d'atteindre une telle vitesse. A contrario, on peut parler de vol à vitesse modérée pour les vols à des vitesses d'avancement inférieures à celle d'un vol de croisière.

En vol à vitesse d'avancement élevée, l'empennage horizontal mobile ou la gouverne de profondeur de l'hélicoptère hybride sont équivalents à un compensateur de profondeur d'un avion, également désigné par son équivalence en langue anglaise « trim ». Le contrôle en tangage de l'hélicoptère hybride est réalisé par l'intermédiaire de la commande cyclique du rotor principal, alors que l'empennage horizontal mobile (ou sa gouverne de profondeur) permet d'ajuster l'équilibre en tangage de l'aéronef selon des critères prédéfinis tels que l'assiette de l'aéronef ou bien le moment de flexion du mât du rotor principal. Les demi-ailes assurent, dans cette configuration, une participation à la portance totale de l'aéronef nécessaire à la sustentation de l'aéronef. Par suite, le rotor principal exerce partiellement la sustentation de l'hélicoptère hybride en vol à vitesse d'avancement élevée avec éventuellement une contribution à son avancement.

On constate donc que le pilotage d'un hélicoptère hybride en vol à vitesse d'avancement élevée nécessite des commandes spécifiques afin de modifier les portances des demi-ailes et de l'empennage horizontal ainsi que le pas des hélices propulsives.

En conséquence, lors d'un vol à vitesse d'avancement élevée, la charge de travail du pilote est importante et complexe afin de gérer les commandes spécifiques de l'hélicoptère hybride en complément des commandes traditionnelles d'un aéronef à voilure tournante.

La présente invention a alors pour objet de proposer un procédé d'aide au pilote permettant notamment de réduire sa charge de travail, en ajustant de façon automatique les portances des demi-ailes et de l'empennage horizontal spécifiques à cet hélicoptère hybride lors d'une phase de vol stabilisée.

On entend par « phase de vol stabilisée » un vol à vitesse d'avancement élevée, donc concernant les hélicoptères hybrides, dont les conditions de vol sont constantes, c'est-à-dire que les principaux paramètres de vol sont constants. Il s'agit notamment de la vitesse verticale et de la trajectoire de l'aéronef. La vitesse verticale constante peut être obtenue notamment en maintenant l'assiette et/ou l'incidence de l'aéronef constante. Dans le cas particulier où la vitesse verticale est nulle, la phase de vol stabilisée se déroule à une altitude constante, on parle alors de vol de croisière. Une trajectoire constante correspond à une trajectoire sans changement de direction de l'aéronef. Lors de cette phase de vol stabilisée, la vitesse d'avancement est également de préférence constante. Cependant, elle peut évoluer en général lentement. Le procédé selon l'invention, ayant une évolution dynamique lente, est compatible avec cette évolution de la vitesse d'avancement.

On connait le document US2008/0237392 qui décrit un hélicoptère hybride utilisant un système de contrôle de l'ensemble des commandes de l'aéronef. En effet, l'aéronef intègre des bases de données comprenant des paramètres de vol optimisés et prédéfinis pour différentes conditions de vol et différents types de vol.

Le pilote choisit le type de vol qu'il souhaite réaliser, par exemple minimiser la consommation de carburant, minimiser les vibrations ou encore favoriser la vitesse d'avancement. Le système de contrôle détermine les conditions de vol par l'intermédiaire de différents capteurs intégrés à l'hélicoptère hybride et choisit alors dans les bases de données les réglages prédéfinis des différentes commandes de l'aéronef correspondant à ces conditions de vol.

Le système de contrôle communique alors ces réglages prédéterminés au pilote automatique qui les applique sans intervention du pilote aux différents organes de pilotage de l'hélicoptère hybride.

Le document FR2959205 décrit un procédé de commande et de régulation de l'angle de braquage d'un empennage horizontal d'un hélicoptère hybride à vitesse d'avancement élevée et stabilisée. L'objectif de ce réglage de l'angle de braquage est l'optimisation de la puissance consommée par l'aéronef.

Ce procédé se compose de trois boucles de régulation. La première boucle commande l'assiette de l'aéronef, par l'intermédiaire du pas cyclique longitudinal et la seconde boucle commande la vitesse d'avancement de l'aéronef, par l'intermédiaire du pas des hélices propulsives. Ces deux boucles assurent la stabilisation de l'aéronef en assiette longitudinale et vitesse d'avancement. Enfin, la troisième boucle optimise la puissance de l'aéronef, par l'intermédiaire de l'angle de braquage de l'empennage horizontal, en maintenant l'assiette longitudinale et la vitesse d'avancement constantes.

En effet, une variation de l'angle de braquage de l'empennage horizontal modifie sa portance. Par suite, l'assiette longitudinale de l'aéronef étant maintenue constante par la première boucle de régulation, cette variation de la portance de l'empennage horizontal permet de soumettre le fuselage à un moment de tangage piqueur ou cabreur. Il convient alors d'agir sur l'orientation du rotor principal pour le rendre « cabreur » c'est-à-dire incliné vers l'arrière de l'aéronef ou « piqueur » c'est-à-dire incliné vers l'avant de l'aéronef pour contrer, selon le besoin, l'effet du moment de tangage du à l'empennage.

Quand le rotor principal est piqueur, il est propulsif, c'est-à-dire qu'il participe à l'avancement de l'aéronef et est entraîné en rotation par la motorisation de l'aéronef. Par contre, quand le rotor principal est cabreur, il est en mode autogire, c'est-à-dire qu'il n'est pas entraîné en rotation par la motorisation, mais par l'écoulement d'air créé par l'avancement de l'aéronef. Dans ce cas, le rotor principal génère uniquement une portance.

En conséquence, une modification de l'angle de braquage de l'empennage horizontal a un effet sur le fonctionnement du rotor principal et notamment sur sa puissance consommée.

Par ailleurs, le document FR 2916420 décrit un hélicoptère hybride comportant au moins une gouverne de profondeur sur un empennage horizontale dont l'angle de braquage peut être commandé en fonction du moment de flexion du mât du rotor principal. De plus, la commande du pas cyclique des pales du rotor principal permet de piloter l'assiette longitudinale de l'hélicoptère hybride et la portance des ailes de cet hélicoptère hybride peut être un pourcentage particulier de sa portance totale en vol de croisière.

De plus, Le document WO 2005/005250 décrit un hélicoptère hybride dont les ailes fournissent environ 70% de la portance totale lors d'un vol de croisière.

On connait également le document FR 2916419 qui décrit un hélicoptère hybride dont la vitesse de rotation du rotor principal peut être réduite en vol de croisière. Le contrôle du pas cyclique longitudinal des pales du rotor principal permet alors de réduire la trainée du fuselage de l'hélicoptère hybride. De plus, cet hélicoptère comporte au moins une gouverne de profondeur sur un empennage horizontale dont l'angle de braquage peut être commandé afin d'annuler le moment de flexion du mât du rotor principal.

On connait également un dispositif de pilotage automatique d'un hélicoptère hybride assurant le maintien de l'incidence aérodynamique de l'aéronef constante et égale à une incidence de référence dans le cas d'un vol de croisière stabilisée. Pour maintenir cette incidence constante, le pilote automatique agit sur le pas collectif des pales du rotor principal.

De même, ce dispositif permet de maintenir l'assiette longitudinale de l'aéronef, autour de son axe de tangage, constante et égale à une assiette de référence dans le cas d'un vol de croisière stabilisée. Dans ce cas, le pilote automatique agit sur le pas cyclique longitudinal des pales du rotor principal.

En outre, le dispositif dispose d'un affichage sur lequel peuvent être représentées l'incidence de référence et l'assiette de référence. Le pilote peut alors visualiser sur cet affichage l'assiette et l'incidence courantes de l'aéronef et, le cas échéant, leurs valeurs de référence.

La présente invention a pour objet un procédé de commande d'un aéronef à voilure tournante à vitesse d'avancement élevée permettant de piloter simultanément les portances de ses demi-ailes et de son empennage horizontal lors d'une phase de vol stabilisée. Selon l'invention, un tel aéronef comporte un fuselage, au moins un rotor principal muni d'une pluralité de pales, au moins une hélice propulsive à pas variable, au moins une surface sustentatrice et au moins une motorisation entraînant en rotation le rotor principal et chaque hélice propulsive. La surface sustentatrice peut comporter deux demi-ailes positionnées de part et d'autre du fuselage ainsi qu'au moins un empennage horizontal positionné à une extrémité de l'aéronef et muni d'au moins une surface mobile.

Ce procédé permet de déterminer un pas collectif de consigne et un pas cyclique longitudinal de consigne, puis d'ajuster la portance des deux demi-ailes afin que le pas collectif des pales du rotor principal soit égal à ce pas collectif de consigne lors d'une phase de vol stabilisée. La portance des deux demi-ailes, qui est égale à la somme de la portance de chaque demi-aile, est ajustée en agissant sur un moyen aérodynamique de l'aéronef.

En effet, une phase de vol stabilisée correspond à un vol relatif à une trajectoire et une vitesse horizontale de l'aéronef constantes, la vitesse verticale étant constante, voire nulle dans le cas particulier d'un vol en palier. La réalisation d'un tel vol peut être obtenue notamment par l'intermédiaire d'un pilote automatique présent dans l'aéronef, régulant notamment les commandes de pas cyclique longitudinal et de pas collectif des pales du rotor principal de l'aéronef. Le pas de chaque hélice propulsive peut également être régulé par le pilote automatique.

Ainsi, la réalisation d'une phase de vol stabilisée peut être obtenue par une première boucle de régulation des commandes de l'aéronef, le procédé selon l'invention constituant dans ce cas une seconde boucle de régulation de certaines de ces commandes.

Cependant, la stabilisation complète de l'aéronef, lors d'une phase de vol stabilisée, n'est pas assurée de façon optimum.

Tout d'abord au cours du vol, la portance totale de l'aéronef varie notamment en fonction de la masse de l'aéronef.

De plus, la masse volumique de l'air entourant l'aéronef varie en fonction de la température et de l'altitude, affectant le réglage en portance de l'aéronef.

Ensuite, la consommation de carburant allège l'aéronef au cours du vol. De plus, lors d'une mission, l'aéronef est amené à charger et décharger du fret ou des passagers, ce qui impacte sa masse.

Par ailleurs, la portance totale d'un aéronef s'oppose à son poids afin de maintenir l'aéronef en sustentation, le poids de l'aéronef étant obtenu par la multiplication de sa masse par l'accélération de la gravité terrestre. Par la suite, on entend par l'expression « portance totale » la portance nécessaire pour équilibrer le poids de l'aéronef.

Lorsque la portance totale de l'aéronef s'oppose exactement à son poids, l'aéronef évolue avec une accélération verticale nulle, c'est-à-dire à vitesse verticale constante. Lorsque cette portance totale est supérieure à ce poids, l'aéronef évolue avec une accélération verticale positive, c'est-à-dire que sa vitesse de montée augmente. A contrario, lorsque cette portance totale est inférieure à ce poids, l'aéronef évolue avec une accélération verticale négative, c'est-à-dire que sa vitesse de descente augmente.

De fait, pour maintenir une phase de vol stabilisée, la portance totale de l'aéronef doit être ajustée en permanence afin de s'adapter aux variations de la masse de l'aéronef et de la masse volumique de l'air.

Cette portance totale de l'aéronef est constituée principalement par la portance du rotor principal lors d'un vol à vitesse modérée. Par contre, lors d'un vol à vitesse d'avancement élevée, elle est constituée essentiellement par la somme de la portance du rotor principal et de la portance des demi-ailes. Le fuselage de l'aéronef et son empennage horizontal peuvent également avoir une contribution à cette portance totale de l'aéronef. Cependant, nous ne la prendrons pas en compte, celle-ci étant négligeable pour la majorité des aéronefs.

De fait, en vol à vitesse d'avancement élevée, la présence de ces demi-ailes permet de réduire la participation du rotor principal à la portance totale de l'aéronef. De plus, l'utilisation d'au moins une hélice propulsive permet également de réduire la participation du rotor principal à la propulsion de l'aéronef. En conséquence, la portance et la propulsion du rotor principal peuvent être réduites, et par suite, la traînée aérodynamique du rotor principal peut être également réduite.

Le procédé selon l'invention est remarquable en ce qu'il permet d'ajuster la portance des demi-ailes de l'aéronef afin que cet aéronef converge vers un point de fonctionnement optimisé de son rotor principal lors d'une phase de vol stabilisée, tout en conservant un objectif de tenue verticale constant telle qu'une vitesse verticale ou une incidence constante permettant de rester en phase de vol stabilisée.

En effet, le rotor principal d'un aéronef possède au moins un point de fonctionnement optimal auquel correspond un couple de valeurs de pas collectif et de pas cyclique longitudinal des pales du rotor principal. Ce point de fonctionnement optimal du rotor principal est généralement identifié lors des essais en vol de mise au point de l'aéronef. Il dépend entre autres du rotor principal et des demi-ailes de l'aéronef.

Ce couple de valeurs de pas collectif et de pas cyclique longitudinal, correspondant à ce point de fonctionnement optimal du rotor principal, constitue alors un pas collectif de consigne et un pas cyclique longitudinal de consigne. Ces valeurs peuvent notamment être fonction de la vitesse d'avancement de l'aéronef et de la masse volumique de l'air.

Ce point de fonctionnement optimal du rotor principal peut correspondre à une finesse aérodynamique du rotor principal permettant par exemple de minimiser la consommation de carburant de l'aéronef.

Ainsi, si la masse de l'appareil diminue du fait de la consommation de carburant, le rotor reste figé sur ce pas collectif de consigne alors que la portance des demi-ailes est diminuée pour conserver l'objectif de tenue vertical correspondant à la phase de vol stabilisée.

Les valeurs des pas collectif et cyclique de consigne dépendent notamment des demi-ailes ou du rotor principal dont la finesse se dégrade le plus vite lorsqu'on augmente sa charge.

Par exemple, des essais ont permis de déterminer que le point de fonctionnement optimal du rotor principal d'un aéronef en phase de vol stabilisée correspondait à une puissance absorbée par le rotor principal comprise entre 20 et 40% de la puissance absorbée par ce rotor principal en vol stationnaire.

Selon un autre exemple, pour un aéronef d'une masse de 7 tonnes, ce point de fonctionnement optimal du rotor principal peut correspondre à une portance du rotor principal nécessaire pour sustenter une masse de 3.5 tonnes.

Le procédé selon l'invention permet d'amener le rotor principal vers ce point de fonctionnement optimal à l'équilibre, en ajustant la portance des deux demi-ailes. En effet, une valeur de la portance totale d'un aéronef, qui est la somme de la portance du rotor principal et de la portance des demi-ailes, correspond à cet objectif de tenue verticale de l'aéronef. Par suite, la portance du rotor principal est modifiée lorsque l'on ajuste la portance des deux demi-ailes afin d'atteindre cette valeur de portance totale. De plus, la modification de la portance du rotor principal est obtenue par la modification du pas collectif des pales de ce rotor principal.

De fait, le procédé selon l'invention permet d'ajuster la portance des deux demi-ailes jusqu'à ce que le pas collectif des pales de ce rotor principal soit égal au pas collectif de consigne correspondant au point de fonctionnement optimal de ce rotor principal.

On rappelle que la portance totale d'un aéronef s'oppose au poids de l'aéronef afin de maintenir l'aéronef en sustentation, ce poids étant défini à partir de la masse de l'aéronef multipliée par l'accélération de la gravité terrestre. Par ailleurs, cette masse diminue lors d'un vol, notamment par la consommation de carburant de la motorisation, donc la portance totale de l'aéronef doit diminuer également.

Par suite, afin de conserver le point de fonctionnement du rotor principal et la valeur de pas collectif associée, la portance des demi-ailes est ajustée par le procédé, lors de la phase de vol stabilisée, pour compenser les variations de masse de l'aéronef.

Ainsi le procédé permet de réduire la charge de travail du pilote en gérant automatiquement la portance des demi-ailes pour optimiser l'équilibre de l'aéronef en phase de vol stabilisée.

Si la phase de vol est réalisée manuellement par le pilote, le procédé selon l'invention a une évolution dynamique lente pour ne pas perturber le pilotage de l'aéronef.

De même, lorsque la phase de vol stabilisée est réalisée par une première boucle de régulation des commandes de l'aéronef, une seconde boucle de régulation constituant le procédé selon l'invention a une évolution dynamique plus lente que cette première boucle afin de ne pas perturber son fonctionnement.

Par ailleurs, le procédé selon l'invention permet d'ajuster la portance de l'empennage horizontal en agissant sur un moyen de manoeuvre de la surface mobile de l'empennage horizontal afin que le pas cyclique longitudinal des pales du rotor principal soit égal au pas cyclique longitudinal de consigne.

Il est connu, comme expliqué auparavant, qu'une variation de la portance de l'empennage horizontal permet de rendre le rotor principal piqueur ou cabreur lors d'une phase de vol stabilisée, l'assiette (ou l'incidence) de l'aéronef étant constante. Le pas cyclique longitudinal des pales du rotor principal est alors modifié pour s'opposer à cet effet de l'empennage horizontal, les caractéristiques de la phase de vol, telles que la vitesse d'avancement de l'aéronef ou son assiette par exemple, restant constantes.

En conséquence, on ajuste selon le procédé la portance de l'empennage horizontal jusqu'à ce que le pas cyclique longitudinal des pales du rotor principal corresponde à ce pas cyclique longitudinal de consigne. La portance de l'empennage horizontal est ajustée en agissant sur le moyen de manoeuvre de chaque surface mobile de l'empennage horizontal. Le procédé permet ainsi de compenser notamment les variations de centrage de masse de l'aéronef.

De la sorte, le procédé permet de réduire la charge de travail du pilote en gérant automatiquement la portance de l'empennage horizontal pour optimiser l'équilibre de l'aéronef en phase de vol stabilisée.

Chaque surface mobile de l'empennage peut être constituée par une gouverne de profondeur mobile de l'empennage horizontal. De préférence, l'empennage horizontal comporte deux gouvernes.

L'ajustement de la portance des demi-ailes et de la portance de l'empennage horizontal est ainsi obtenu à basse fréquence pour que l'équilibre global de l'aéronef converge vers un fonctionnement optimisé de son rotor principal lors d'une phase de vol stabilisée, tout en conservant un objectif de tenue verticale constant telle qu'une vitesse verticale ou une incidence constante et un objectif d'assiette longitudinale constant, correspondant à cette phase de vol stabilisée.

De plus, le procédé selon l'invention est utilisé uniquement lors des phases de vol stabilisées. De fait, la vitesse d'avancement de l'aéronef doit être supérieure à 50 kts (50 noeuds). Par ailleurs, ce procédé doit être désactivé lors des changements d'évolutions de l'aéronef, notamment des virages. Par exemple, il sera actif uniquement lorsque l'angle de roulis de l'aéronef est inférieur à 10°. Enfin, pour éviter de s'opposer à une manoeuvre du pilote de l'aéronef, le procédé est désactivé dès qu'une action sur les commandes de l'appareil de la part du pilote est détectée.

Ce procédé permet d'ajuster la portance des deux demi-ailes en agissant sur un moyen aérodynamique de l'aéronef.

Cet ajustement de portance peut, par exemple, être obtenu par un changement de l'angle d'incidence aérodynamique ou plus simplement d'« incidence » des demi-ailes de l'aéronef. Ce changement d'incidence peut être obtenu, lorsque les demi-ailes sont totalement fixes, par un changement d'assiette de l'aéronef. En effet, la trajectoire de l'aéronef étant inchangée, une modification de l'assiette de l'aéronef, et donc de son incidence, modifie l'incidence des deux demi-ailes. Dans ce cas, le moyen aérodynamique de l'aéronef permet donc de modifier l'assiette de l'aéronef.

Les demi-ailes peuvent également être mobiles, par exemple en rotation, dans leur intégralité. Le moyen aérodynamique de l'aéronef permet alors de manoeuvrer les demi-ailes par exemple en rotation sans changement de l'assiette de l'aéronef, et par suite de modifier l'incidence desdites demi-ailes.

De préférence, le moyen aérodynamique de l'aéronef comporte, sur chaque demi-aile, au moins un volet mobile en arrière d'une surface fixe et au moins un système de manoeuvre de chaque volet. Cette manoeuvre peut correspondre à un déplacement de ces volets, modifiant par exemple la surface de chaque volet, permettant ainsi de modifier la portance des demi-ailes, l'incidence des demi-ailes restant constante. Une modification de la portance peut également être obtenue, avec ou sans déplacement, par rotation de chaque volet.

De plus, le volet de chaque demi-aile peut être manoeuvré de façons différentes afin d'obtenir une différence de portance entre les deux demi-ailes. Cette différence de portance entre les deux demi-ailes permet par exemple de compenser les effets du rotor principal, notamment en mouvement de roulis.

En effet, les flux d'air générés par la rotation du rotor principal affectent différemment les deux demi-ailes placées de part et d'autre du fuselage de l'aéronef. Ces flux sont tourbillonnants et vont de l'avant vers l'arrière sur une demi-aile et de l'arrière vers l'avant sur l'autre demi-aile. Ils créent ainsi une dissymétrie d'incidence entre les deux demi-ailes. De fait, un écart de portance apparait entre les deux demi-ailes et entraîne la mise en roulis de l'aéronef.

Pour compenser cet écart de portance et éviter ainsi la mise en roulis de l'aéronef, le pilote doit agir en permanence sur le pas cyclique latéral des pales du rotor principal. Avantageusement, le procédé selon l'invention permet de déterminer la différence de portance entre chaque demi-aile. Le procédé permet ensuite de manoeuvrer chaque volet, par l'intermédiaire du système de manoeuvre, afin d'ajuster les portances des deux demi-ailes et obtenir cette différence.

Le pilote n'a ainsi plus à prendre en charge cette compensation de la dissymétrie d'incidence entre les deux demi-ailes générée par le rotor principal.

De même, le procédé peut ajuster la portance de chaque demi-aile, en manoeuvrant chaque volet de façons différentes par l'intermédiaire du moyen de manoeuvre des volets, afin que le pas cyclique latéral des pales du rotor principal soit égal à un pas cyclique latéral de consigne. Dans ce cas, la différence de portance entre les deux demi-ailes ainsi obtenue, associée au moment de roulis du rotor, permet de respecter un objectif d'assiette latérale de l'aéronef. Les volets des demi-ailes sont manoeuvrés à basse fréquence afin que l'aéronef converge vers cet objectif de pas latéral. Ce pas cyclique latéral de consigne peut être fonction de la vitesse d'avancement de l'aéronef et de la masse volumique de l'air.

Dans une autre variante de ce procédé, un moment de flexion du mât du rotor principal est mesuré directement par un capteur dédié. Ce moment permet de déterminer un moment de flexion longitudinale et un moment de flexion latérale du mât du rotor principal.

La portance de l'empennage horizontal, qui permet au rotor principal d'être piqueur ou cabreur, agit directement sur la valeur de ce moment de flexion longitudinale. De fait, le procédé permet d'ajuster la portance de l'empennage horizontal jusqu'à ce que ce moment de flexion longitudinale soit égal à un moment de flexion longitudinale de consigne. Dans ce cas, l'empennage horizontal permet donc de réaliser une phase de vol stabilisée avec un moment de flexion du mât du rotor principal correspondant à ce moment de flexion longitudinale de consigne, afin par exemple de réduire les sollicitations longitudinales du mât du rotor principal. Là encore, le pas cyclique longitudinal et le pas collectif sont ajustés pour maintenir les conditions de vol inchangées.

De même, le moment de flexion latérale du mât du rotor principal peut être ajusté en pilotant de façons différentes les volets des deux demi-ailes afin d'obtenir une différence de portance entre les deux demi-ailes. En effet, des portances différentes sur chaque demi-aile permettent de générer un moment de roulis capable de s'opposer à ce moment de flexion latérale. De fait, le procédé ajuste la portance de chaque demi-aile, jusqu'à ce qu'un moment de flexion latérale du mât du rotor principal soit égal à un moment de flexion latérale de consigne, afin par exemple de réduire les sollicitations latérales du mât du rotor principal.

L'ajustement de portance des deux demi-ailes est obtenu en agissant sur le système de manoeuvre de chaque volet. Les moments de flexion longitudinale et latérale de consigne sont fonction des conditions de vol.

Dans un mode de réalisation de l'invention, on affiche sur un moyen de visualisation de l'aéronef des informations relatives aux valeurs actuelles des pas collectif et cyclique des pales du rotor principal ainsi qu'au pas collectif de consigne et qu'aux pas cycliques longitudinal et latéral de consigne, au moins une information relative aux volets des deux demi-ailes et au moins une information relative à l'empennage horizontal.

En effet, afin d'aider le pilote à optimiser le fonctionnement de l'aéronef, on indique sur ce moyen de visualisation les informations lui permettant d'ajuster de façon optimale les pas collectif et cycliques des pales du rotor principal ainsi que les positions des volets des demi-ailes et de l'empennage horizontal.

Pour cela, on affiche sur un premier graphe un premier point correspondant au couple de valeurs courantes du pas collectif et du pas cyclique longitudinal des pales du rotor principal. Le pas cyclique longitudinal se trouve en abscisse et le pas collectif en ordonnée de ce premier graphe. Sur ce premier graphe est également représenté un second point correspondant au couple constitué par le pas collectif de consigne et le pas cyclique longitudinal de consigne.

De plus, sur un second graphe comprenant un seul axe représentant le pas cyclique latéral, on affiche un troisième point correspondant à la valeur courante du pas cyclique latéral des pales du rotor principal ainsi qu'un quatrième point correspondant au pas cyclique latéral de consigne.

Ensuite, pour informer le pilote du niveau de portance des demi-ailes, on affiche une position moyenne des volets des deux demi-ailes, ainsi que la différence de positions entre ces volets. La position moyenne des volets correspond en fait à la position des volets, identique pour chaque demi-aile, permettant d'obtenir la portance des demi-ailes. La différence de positions entre ces volets correspond à la différence de portance des deux demi-ailes, permettant de compenser la dissymétrie d'incidence générée par le rotor principal entre les deux demi-ailes.

On affiche également une position de la surface mobile (gouverne de profondeur) de l'empennage horizontal correspondant à la portance de l'empennage.

Enfin, on affiche sur ce moyen de visualisation des consignes de braquage, par exemple sous forme de flèches, destinées au pilote. Ces consignes de braquage indiquent ainsi au pilote, lorsqu'il est en pilotage manuel, dans quel sens manoeuvrer le volet de chaque demi-aile et la surface mobile de l'empennage horizontal, afin que le rotor principal converge vers son point de fonctionnement optimal. Un aéronef à voilure tournante à vitesse d'avancement élevée en phase de vol stabilisée apte à mettre en oeuvre le procédé de commande précédemment évoqué est décrit ci-dessous. Un tel aéronef comporte un fuselage, au moins un rotor principal muni d'une pluralité de pales, au moins une hélice propulsive à pas variable, au moins une surface sustentatrice et au moins une motorisation entraînant en rotation le rotor principal et chaque hélice propulsive.

Cette surface sustentatrice comporte au moins deux demi-ailes positionnées de part et d'autre du fuselage et au moins un moyen aérodynamique destiné à modifier la portance des demi-ailes. De plus, cette surface sustentatrice comporte au moins un empennage horizontal positionné à une extrémité de l'aéronef et comportant au moins une surface mobile ainsi qu'au moins un moyen de manoeuvre de cette surface mobile.

Le moyen aérodynamique de l'aéronef permet d'ajuster la portance des deux demi-ailes afin que le pas collectif des pales du rotor principal soit égal à un pas collectif de consigne lors d'une phase de vol stabilisée. Ce pas collectif de consigne correspond à un point de fonctionnement optimal du rotor principal.

Dans un mode de réalisation, le moyen de manoeuvre de la surface mobile de l'empennage permet de manoeuvrer cette surface mobile ajustant ainsi la portance de l'empennage horizontal afin que le pas cyclique longitudinal des pales du rotor principal soit égal à un pas cyclique longitudinal de consigne lors d'une phase de vol stabilisée. Ce pas cyclique longitudinal de consigne correspond à ce même point de fonctionnement optimal du rotor principal.

Selon un mode de réalisation, le moyen aérodynamique de l'aéronef comporte au moins un volet mobile sur chaque demi-aile et au moins un système de manoeuvre de chaque volet. Chaque système de manoeuvre permet de manoeuvrer les volets afin d'ajuster la portance de chaque demi-aile.

Dans un mode de réalisation, l'aéronef comporte un moyen de visualisation affichant des informations permettant au pilote d'optimiser le fonctionnement de l'aéronef.

En effet, ce moyen de visualisation comporte deux graphes fournissant des informations relatives aux pas collectif et cyclique des pales du rotor principal. Sur un premier graphe, ce moyen de visualisation affiche un premier point correspondant au couple de valeurs courantes du pas collectif et du pas cyclique longitudinal des pales du rotor principal ainsi qu'un second point correspondant au couple constitué par le pas collectif de consigne et le pas cyclique longitudinal de consigne. Le pas cyclique longitudinal se trouve en abscisse et le pas collectif en ordonnée de ce premier graphe.

Sur un second graphe comprenant un seul axe, représentant le pas cyclique latéral, sont affichés un troisième point correspondant à la valeur courante du pas cyclique latéral des pales du rotor principal et un quatrième point correspondant au pas cyclique latéral de consigne.

De plus, pour informer le pilote du niveau de portance des demi-ailes, ce moyen de visualisation affiche une position moyenne des volets des deux demi-ailes, ainsi qu'une différence de positions entre ces volets, correspondant à la différence de portance des deux demi-ailes, permettant de compenser la dissymétrie d'incidence générée par le rotor principal entre les deux demi-ailes.

Ensuite, ce moyen de visualisation affiche une position de la surface mobile de l'empennage horizontal correspondant à la portance de l'empennage.

Ce moyen de visualisation affiche également un mode de fonctionnement activé au niveau des volets et de l'empennage horizontal. En effet, le système de manoeuvre, qui assure la manoeuvre des volets de chaque demi-aile, peut être piloté par un pilote automatique, présent sur l'aéronef ou bien par le pilote. Ce système de manoeuvre peut également être défaillant et par suite inopérant. Ce moyen de visualisation permet donc d'indiquer quel mode de pilotage est activé ou bien si ce système de manoeuvre est inopérant. Il en est de même pour le moyen de manoeuvre de l'empennage horizontal.

Enfin, ce moyen de visualisation affiche des consignes de braquage, par exemple sous forme de flèches, destinées au pilote. Ces consignes de braquage indiquent ainsi au pilote dans quel sens manoeuvrer les volets de chaque demi-aile et la surface mobile de l'empennage horizontal, afin que le rotor principal converge vers son point de fonctionnement optimal.

L'invention et ses avantages apparaîtront avec plus de détails dans le cadre de la description qui suit avec des exemples de réalisation donnés à titre illustratif en référence aux figures annexées qui représentent :
- la figure 1, un schéma synoptique du procédé selon l'invention,
- les figures 2 à 4, un aéronef apte à mettre en oeuvre le procédé selon l'invention,
- la figure 5, un moyen de visualisation de cet aéronef.

Les éléments présents dans plusieurs figures distinctes sont affectés d'une seule et même référence.

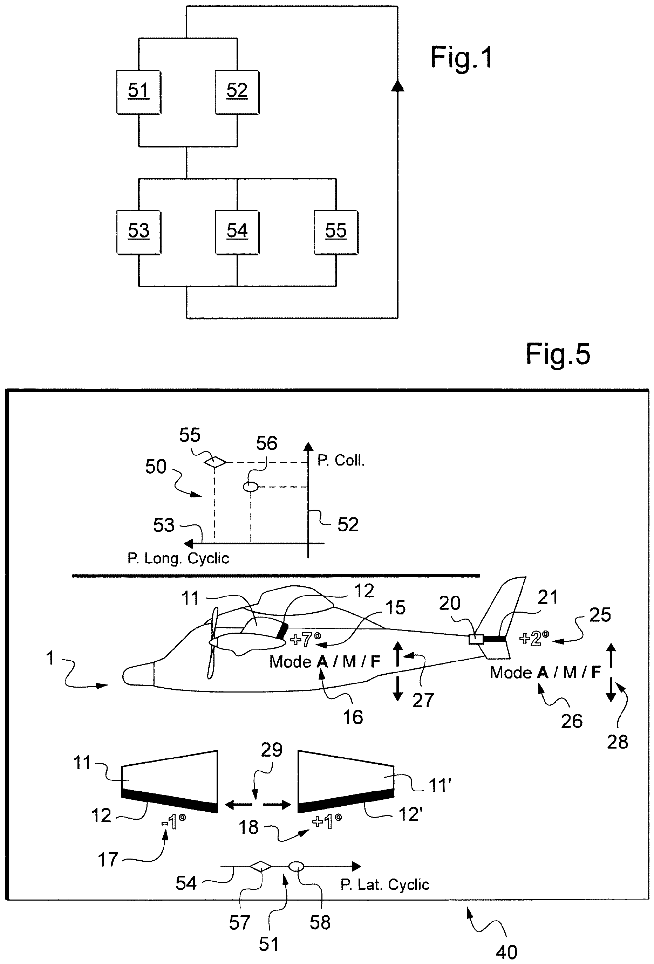

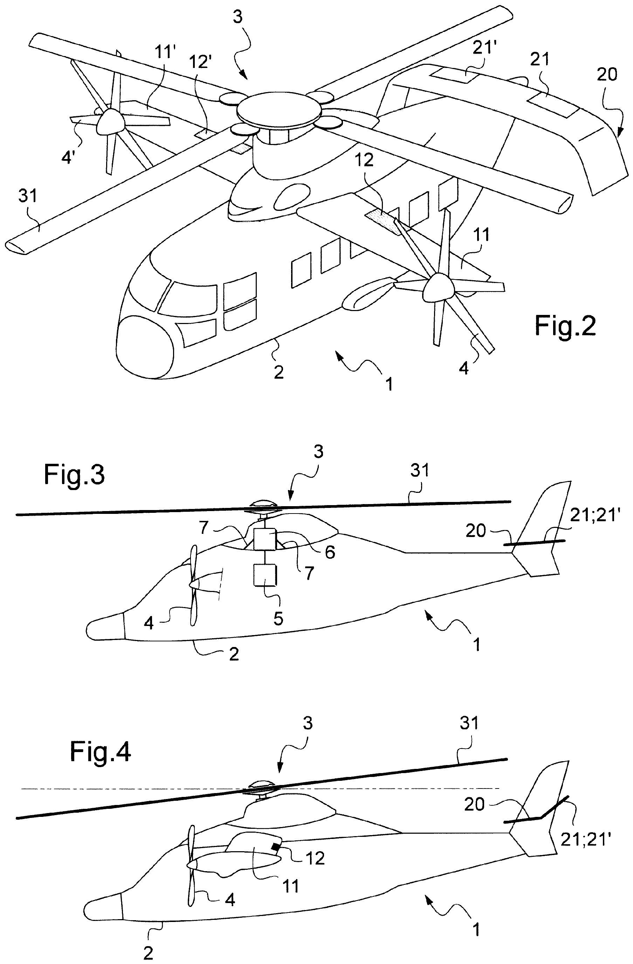

La figure 1 décrit un procédé de commande d'un aéronef 1 à voilure tournante à vitesse d'avancement élevée qui se composent de plusieurs étapes. Les figures 2 à 4 décrivent un aéronef 1 à voilure tournante à vitesse d'avancement élevée apte à mettre en oeuvre le procédé de commande selon l'invention.

Ce procédé permet d'ajuster la portance des demi-ailes 11, 11' et de l'empennage horizontal 20 lors d'une phase de vol stabilisée de l'aéronef 1. Lors d'une telle phase de vol stabilisée, les principaux paramètres de vol de l'aéronef 1 sont constants, notamment sa trajectoire et son incidence ainsi que sa vitesse d'avancement. De plus, ce procédé n'est activé sur l'aéronef 1 que lorsque l'angle de roulis de l'aéronef 1 est inférieur à 10° et la vitesse d'avancement de l'aéronef 1 est supérieure à 50 kts (50 noeuds), aucune action sur les commandes de l'aéronef 1 n'étant exercée par un pilote.

Un tel aéronef 1, représenté sur les figures 2 et 3, comporte un fuselage 2, un rotor principal 3 muni d'une pluralité de pales 31, deux hélices propulsives 4, 4' à pas variable, deux demi-ailes 11, 11' positionnées de part et d'autre du fuselage 2, un empennage horizontal 20 positionné à l'extrémité arrière de l'aéronef 1 et une motorisation 5, entraînant en rotation le rotor principal 3 et les hélices propulsives 4, 4'. La motorisation 5 est notamment reliée au rotor principal 3 par une boite de transmission principale de puissance 6, qui est fixée au fuselage 2 de l'aéronef 1 par une pluralité de barres de soutien 7.

Les demi-ailes 11, 11' comportent un moyen aérodynamique destiné à ajuster la portance de chaque demi-aile. Ce moyen aérodynamique comporte un volet 12, 12' sur chaque demi-aile 11, 11' ainsi qu'un système de manoeuvre de chaque volet 12, 12'. L'empennage horizontal 20 comporte deux surfaces mobiles 21, 21', qui peuvent être manoeuvrées par un moyen de manoeuvre des surfaces mobiles 21, 21'. La manoeuvre de chaque volet 12, 12' et des surfaces mobiles 21, 21' provoquent respectivement un ajustement de la portance de chaque demi-aile 11, 11' et de l'empennage horizontal 20.

Le procédé de commande décrit sur la figure 1 comporte quatre étapes.

L'étape 51 consiste à déterminer un pas collectif de consigne et un pas cyclique longitudinal de consigne correspondant à un point de fonctionnement optimal du rotor principal 3. Ce point de fonctionnement optimal est généralement identifié lors des essais en vol de mise au point de l'aéronef 1. Il dépend entre autres du rotor principal 3 et des demi-ailes11, 11' de l'aéronef 1. Ce point de fonctionnement optimal du rotor principal 3 peut correspondre à une finesse aérodynamique du rotor principal 3 permettant par exemple de minimiser la consommation de carburant de l'aéronef.

Simultanément à l'étape 51, une étape 52 consiste à déterminer une différence de portance entre chaque demi-aile 11, 11' afin de compenser des effets du rotor principal 3 sur chaque demi-aile 11, 11'. En effet, les flux d'air générés par la rotation du rotor principal 3 affectent différemment les deux demi-ailes 11, 11' placés de part et d'autre du fuselage 2 de l'aéronef 1 et créent ainsi une dissymétrie d'incidence entre les deux demi-ailes 11, 11'. De fait, un écart de portance apparait entre chaque demi-aile 11, 11' et entraîne une mise en roulis de l'aéronef 1.

L'étape 52 consiste à déterminer la différence de portance entre chaque demi-aile 11, 11' pour compenser cet écart de portance et éviter ainsi la mise en roulis de l'aéronef 1.

Au cours d'une étape 53, on ajuste la portance des demi-ailes 11, 11' afin que le pas collectif des pales du rotor principal 3 soit égal au pas collectif de consigne déterminé à l'étape 51. La portance des deux demi-ailes 11, 11', qui est égale à la somme de la portance de chaque demi-aile11, 11', est ajustée en agissant sur un moyen aérodynamique de l'aéronef 1.

Simultanément à l'étape 53, une étape 54 consiste à ajuster la portance de l'empennage horizontal 20 afin que le pas cyclique longitudinal des pales du rotor principal 3 soit égal au pas cyclique longitudinal de consigne déterminé à l'étape 51.

En effet, comme représentée sur la figure 4, une variation de la portance de l'empennage 20, obtenue en déplaçant les surfaces mobiles 21, 21', modifie l'inclinaison du rotor principal 3, l'aéronef 1 étant en phase de vol stabilisée. Suivant cette inclinaison, le rotor principal 3 peut être piqueur, comme représenté sur la figure 4, ou cabreur, au sens du moment de tangage, les pas collectif et cyclique des pales du rotor principal 3 étant modifiés afin de maintenir les paramètres de la phase de vol stabilisée constants. Par suite, un ajustement de la portance de l'empennage 20 entraîne une modification de l'assiette longitudinale de l'aéronef 1. Il est ainsi possible d'ajuster la portance de l'empennage 20 afin que le pas cyclique longitudinal des pales du rotor principal 3 soit égal au pas cyclique longitudinal de consigne.

Selon une variante de cette étape 54, on ajuste la portance de l'empennage horizontal 20 afin qu'un moment de flexion longitudinale d'un mât du rotor principal 3 soit égal à un moment de flexion longitudinale de consigne. En effet, il est possible de mesurer le moment de flexion du mât du rotor principal 3, notamment dans le cas d'un aéronef à moyeu rigide. Ensuite, une modification de la portance de l'empennage 20 modifie l'inclinaison du rotor principal 3, et par suite agit sur la flexion du mât de ce rotor principal 3. De fait, il est possible, en ajustant la portance de l'empennage 20, d'amener le moment de flexion longitudinale du mât du rotor égal à un moment de flexion longitudinale de consigne afin que ce moment de flexion soit faible voire nul par exemple, et limiter ainsi les sollicitations de ce mât.

Enfin, une étape 55, simultanée aux étapes 53 et 54, consiste à afficher sur un moyen de visualisation 40, représenté sur la figure 5, des informations 50 et 51 relatives aux pas collectif et cyclique des pales 31 du rotor principal 3, au moins une information 15, 16, 17 et 18 relative aux volets 12, 12' des deux demi-ailes 11, 11' et au moins une information 25 et 26 relative à l'empennage horizontal 20. Ces informations 50 sont constituées par un premier graphe sur lequel sont représentés un premier point 56 correspondant au couple de valeurs courantes du pas collectif et du pas cyclique longitudinal des pales 31 du rotor principal 3 et un second point 55 correspondant au couple constitué par le pas collectif de consigne et le pas cyclique longitudinal de consigne. Le pas cyclique longitudinal se trouve en abscisse 53 et le pas collectif en ordonnée 52 de ce premier graphe.

De plus, les informations 51 sont constituées par un second graphe comprenant un seul axe 54 représentant le pas cyclique latéral des pales 31 du rotor principal 3. Sur ce second graphe sont affichés un troisième point 58 correspondant la valeur courante du pas cyclique latéral des pales 31 du rotor principal 3 et un quatrième point 57 correspondant au pas cyclique latéral de consigne.

Ce moyen de visualisation 40 affiche également un mode de fonctionnement 16 activé au niveau des volets 12, 12' et de l'empennage horizontal 20. En effet, le système de manoeuvre, qui assure la manoeuvre des volets 12, 12', peut être piloté par un pilote automatique, présent sur l'aéronef ou bien manuellement par le pilote. Ce système de manoeuvre peut également être défaillant et par suite inopérant. Le moyen de visualisation 40 affiche alors, pour les volets 12, 12', une information 16 ou apparait « Mode A » lorsque le pilote automatique est engagé, « Mode M » lorsque ces volets 12, 12' sont pilotés manuellement et « Mode F » lorsque le système de manoeuvre est défaillant. Il en est de même pour le moyen de manoeuvre de l'empennage horizontal 20.

Enfin, ce moyen de visualisation 40 affiche des consignes de braquage 27, 28, 29, par exemple sous forme de flèches, destinées au pilote. Ces consignes de braquage 27, 28, 29 indiquent ainsi au pilote, lorsqu'il est en pilotage manuel, dans quel sens manoeuvrer les volets 12, 12' de chaque demi-aile 11, 11' et les surfaces mobiles 21, 21' de l'empennage horizontal 20, afin que le rotor principal 3 converge vers son point de fonctionnement optimal.

Ces informations permettent ainsi au pilote d'optimiser le fonctionnement de l'aéronef 1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention tel que défini par les revendications. Par exemple, l'ajustement de la portance des deux demi-ailes 11, 11', réalisé dans le mode de réalisation décrit par le moyen aérodynamique, qui comporte des volets 12, 12' et des systèmes de manoeuvre, peut être obtenu par une rotation dans leur intégralité de ces demi-ailes 11,11' ne possédant pas de volet. Cet ajustement peut également être obtenu par des demi-ailes 11, 11' sans volet, fixes par rapport au fuselage 2 de l'aéronef 1, et par un changement de l'assiette de l'aéronef 1.

De même, l'ajustement de la portance de l'empennage horizontal 20, réalisé dans le mode de réalisation décrit par deux surfaces mobiles 21, 21' et un moyen de manoeuvre, peut être constitué par une mobilité de l'empennage horizontal 20 dans son intégralité.

## Revendications

1. Procédé de commande d'un aéronef (1) à voilure tournante à vitesse d'avancement élevée comportant :
- un fuselage (2),
- au moins un rotor principal (3) muni d'une pluralité de pales (31),
- au moins une hélice propulsive (4) à pas variable,
- au moins deux demi-ailes (11, 11') positionnées de part et d'autre dudit fuselage (2),
- au moins un empennage horizontal (20) positionné à une extrémité dudit aéronef (1), ledit empennage horizontal (20) comportant au moins une surface mobile (21,21'), et
- au moins une motorisation (5), entraînant en rotation ledit rotor principal (3) et chaque hélice propulsive (4), au cours duquel,
- on détermine un pas collectif de consigne et un pas cyclique longitudinal de consigne afin que ledit aéronef (1) converge vers un point de fonctionnement optimisé dudit rotor principal (3) lors d'une phase de vol stabilisée, tout en conservant un objectif de tenue verticale constant, telle qu'une vitesse verticale ou une incidence constante, et un objectif d'assiette longitudinale constant correspondant à ladite phase de vol stabilisée, **caractérisé en ce que** l'on ajuste la portance desdites demi-ailes (11,11') en agissant sur un moyen aérodynamique dudit aéronef (1) afin qu'un pas collectif desdites pales dudit rotor principal (3) soit égal audit pas collectif de consigne.

2. Procédé selon la revendication 1,
**caractérisé en ce que** l'on ajuste ladite portance desdites demi-ailes (11, 11') lorsque :
- l'angle de roulis dudit aéronef (1) est inférieur à 10°,
- la vitesse d'avancement *TAS* dudit aéronef (1) est supérieure à 50 kts, et
- aucune action sur les commandes dudit aéronef (1) n'est détectée.

3. Procédé selon l'une quelconque des revendications 1 à 2, ledit moyen aérodynamique dudit aéronef (1) comportant au moins un volet (12,12') mobile sur chaque demi-aile (11,11') et au moins un système de manoeuvre desdits volets (12,12'),
**caractérisé en ce que** l'on détermine une différence de portance entre chaque demi-aile (11, 11') afin de compenser des effets dudit rotor principal (3) sur lesdites demi-ailes (11,11') et on ajuste ladite portance de chaque demi-aile (11, 11') en manoeuvrant chaque volet (12,12') de façons différentes en agissant sur ledit système de manoeuvre desdits volets (12,12') afin d'obtenir ladite différence de portance entre chaque demi-aile (11, 11').

4. Procédé selon l'une quelconque des revendications 1 à 2, ledit moyen aérodynamique dudit aéronef (1) comportant au moins un volet (12,12') mobile sur chaque demi-aile (11, 11') et au moins un système de manoeuvre desdits volets (12,12'),
**caractérisé en ce que** l'on ajuste la portance de chaque demi-aile (11, 11'), en manoeuvrant chaque volet (12,12') de façons différentes, en agissant sur ledit moyen de manoeuvre desdits volets (12,12') afin qu'un pas cyclique latéral desdites pales dudit rotor principal (3) soit égal à un pas cyclique latéral de consigne.

5. Procédé selon l'une quelconque des revendications 1 à 2, ledit moyen aérodynamique dudit aéronef (1) comportant au moins un volet (12,12') mobile sur chaque demi-aile (11, 11') et au moins un système de manoeuvre desdits volets (12,12'),
**caractérisé en ce que** l'on ajuste la portance de chaque demi-aile (11, 11'), en manoeuvrant chaque volet (12,12') de façons différentes en agissant sur ledit système de manoeuvre desdits volets (12,12') afin qu'un moment de flexion latérale d'un mât dudit rotor principal (3) soit égal à un moment de flexion latérale de consigne.

6. Procédé selon l'une quelconque des revendications 1 à 5,
**caractérisé en ce que** l'on ajuste la portance dudit empennage horizontal (20), en agissant sur un moyen de manoeuvre de chaque surface mobile (21,21') afin qu'un pas cyclique longitudinal desdites pales dudit rotor principal (3) soit égal audit pas cyclique longitudinal de consigne tout en conservant un objectif d'assiette longitudinale de l'aéronef (1) constant correspondant à ladite phase de vol stabilisée.

7. Procédé selon l'une quelconque des revendications 1 à 5,
**caractérisé en ce que** l'on ajuste la portance dudit empennage horizontal (20), en agissant sur un moyen de manoeuvre de chaque surface mobile (21,21') afin qu'un moment de flexion longitudinale d'un mât dudit rotor principal (3) soit égal à un moment de flexion longitudinale de consigne lors de ladite phase de vol stabilisée.

8. Procédé selon l'une quelconque des revendications 1 à 7, chaque demi-aile (11,11') comportant au moins un volet (12,12') mobile,
**caractérisé en ce que** l'on affiche sur un moyen de visualisation (40) dudit aéronef (1) des informations relatives aux valeurs courantes desdits pas collectif et cycliques desdites pales (31) dudit rotor principal (3) ainsi qu'audit pas collectif de consigne et qu'auxdits pas cycliques longitudinal et latéral de consigne, au moins une information relative auxdits volets (12,12') et au moins une information relative audit empennage horizontal (20).

## Patentansprüche

1. Verfahren zur Steuerung eines Drehflügelflugzeugs (1) mit hoher Vortriebsgeschwindigkeit, mit
- einem Rumpf (2),
- mindestens einem Hauptrotor (3), der mit einer Mehrzahl von Rotorblättern (31) versehen ist,
- mindestens einem Vortriebspropeller (4) mit variabler Rotorblattwinkelverstellung,
- mindestens zwei Halbflügeln (11, 11'), die zu beiden Seiten des Rumpfes (2) positioniert sind,
- mindestens einem horizontalen Leitwerk (20), das an einem Ende des Flugzeugs (1) angeordnet ist, wobei das horizontale Leitwerk (20) mindestens eine bewegliche Fläche (21, 21') aufweist, und
- mindestens einer Motorisierung (5), die den Hauptrotor (3) und jeden Vortriebspropeller (4) zu einer Drehbewegung antreibt,
wobei bei dem Verfahren
- eine kollektive Soll-Rotorblattwinkelverstellung und eine longitudinale zyklische Soll-Rotorblattwinkelverstellung bestimmt werden, damit das Flugzeug (1) sich einem optimierten Betriebspunkt des Hauptrotors (3) während einer stabilisierten Flugphase annähert unter Beibehaltung des Ziels eines konstanten Verhaltens in vertikaler Richtung, wie einer konstanten vertikalen Geschwindigkeit oder einer konstanten Auswirkung, und unter Beibehaltung des Ziels einer kontanten Neigung, die der stabilisierten Flugphase entspricht,
**dadurch gekennzeichnet, dass** man den Auftrieb der Halbflügel (11, 11') durch Einwirkung auf ein aerodynamisches Mittel des Flugzeugs (1) justiert, damit ein kollektiver Verstellwinkel der Rotorblätter des Hauptrotors (3) gleich dem kollektiven Soll-Rotorblattverstellwinkel ist.

2. Verfahren nach Anspruch 1,
**dadurch gekennzeichnet, dass** man den Auftrieb der Halbflügel (11, 11') justiert, wenn:
- der Rollwinkel des Flugzeugs (1) kleiner als 10° ist,
- die Vortriebsgeschwindigkeit *TAS* des Flugzeugs (1) größer als 50 kn ist, und
- keinerlei Betätigung der Steuerruder des Flugzeugs (1) erfasst wird.

3. Verfahren nach einem der Ansprüche 1 bis 2, wobei die aerodynamischen Mittel des Flugzeugs (1) mindestens eine bewegliche Klappe (12, 12') auf jedem Halbflügel (11, 11') und mindestens ein System zur Betätigung der Klappen (12, 12') aufweisen,
**dadurch gekennzeichnet, dass** man eine Differenz des Auftriebs zwischen jedem Halbflügel (11, 11') bestimmt, um Einwirkungen des Hauptrotors (3) auf die Halbflügel (11, 11') zu kompensieren, und man den Auftrieb eines jeden Halbflügels (11, 11') justiert, indem jede Klappe (12, 12') unterschiedlich bewegt wird durch Einwirken auf das Betätigungssystem der Klappen (12, 12'), um die Auftriebsdifferenz zwischen jedem Halbflügel (11, 11') zu erhalten.

4. Verfahren nach einem der Ansprüche 1 bis 2,
wobei das aerodynamische Mittel des Flugzeugs (1) mindestens eine bewegliche Klappe (12, 12') auf jedem der Halbflügel (11, 11') und mindestens ein System zur Betätigung der Klappen (12, 12') aufweist,
**dadurch gekennzeichnet, dass** der Auftrieb eines jeden Halbflügels (11, 11') justiert wird, indem jede Klappe (12, 12') unterschiedlich betätigt wird durch Einwirken auf das Betätigungsmittel der Klappen (12, 12'), damit ein seitlicher zyklischer Rotorblattverstellwinkel der Rotorblätter des Hauptrotors gleich einem seitlichen zyklischen Soll-Rotorblattverstellwinkel ist.

5. Verfahren nach einem der Ansprüche 1 bis 2, wobei das aerodynamische Mittel des Flugzeugs (1) mindestens eine bewegliche Klappe (12, 12') auf jedem der Halbflügel (11, 11') und mindestens ein System zur Betätigung der Klappen (12, 12') aufweist,
**dadurch gekennzeichnet, dass** der Auftrieb eines jeden Halbflügels (11, 11') justiert wird, indem jede Klappe (12, 12') unterschiedlich betätigt wird durch Einwirken auf das Betätigungssystem der Klappen (12, 12'), damit ein Moment der seitlichen Biegung der Welle des Hauptrotors (3) gleich einem Sollwert des Moments der seitlichen Biegung ist.

6. Verfahren nach einem der Ansprüche 1 bis 5,
**dadurch gekennzeichnet, dass** der Auftrieb des horizontalen Leitwerks (20) justiert wird, indem auf ein Betätigungsmittel einer jeden beweglichen Fläche (21, 21') eingewirkt wird, damit ein zyklischer longitudinaler Verstellwinkel der Rotorblätter des Hauptrotors (3) gleich dem Sollwert des longitudinalen zyklischen Rotorblattverstellwinkels ist unter Beibehaltung des Ziels einer konstanten Neigung des Flugzeugs (1), die der stabilisierten Flugphase entspricht.

7. Verfahren nach einem der Ansprüche 1 bis 5,
**dadurch gekennzeichnet, dass** der Auftrieb des horizontalen Leitwerks (20) justiert wird durch Einwirken auf ein Betätigungsmittel jeder beweglichen Fläche (21, 21'), damit ein Moment einer Längsbiegung der Welle des Hauptrotors (3) gleich einem Sollwert des Moments der Längsbiegung während der stabilisierten Flugphase ist.

8. Verfahren nach einem der Ansprüche 1 bis 7, wobei jeder Halbflügel (11, 11') mindestens eine bewegliche Klappe (12, 12') aufweist, **dadurch gekennzeichnet, dass** auf einem Anzeigemittel (40) des Flugzeugs Informationen bezüglich aktueller Werte der kollektiven und zyklischen Verstellwinkel der Rotorblätter (31) des Hauptrotors (3) sowie bezüglich des Sollwertes des kollektiven Rotorblattverstellwinkels und der Sollwerte der longitudinalen und lateralen Rotorblattverstellwinkel, mindestens eine Information bezüglich der Klappen (12, 12') und mindestens eine Information bezüglich des horizontalen Leitwerks (20) angezeigt werden.

## Claims

1. Method for controlling a rotary wing aircraft (1) at high forward speed comprising:
- a fuselage (2),
- at least one main rotor (3) provided with a plurality of blades (31),
- at least one propulsive propeller (4) with variable pitch,
- at least two half-wings (11,11') positioned on one side and the other side of said fuselage (2),
- at least one horizontal stabilizer (20) positioned at one end of said aircraft (1), said horizontal stabilizer (20) comprising at least one movable surface (21,21'), and
- at least one power plant (5), driving in rotation said main rotor (3) and each propulsive propeller (4),
in the course of which,
- a setpoint collective pitch and a setpoint longitudinal cyclic pitch are determined in order that said aircraft (1) converges towards an optimized operating point of said main rotor (3) during a stabilized phase of flight, while conserving a constant vertical behaviour target, such as a constant vertical speed or a constant angle of incidence, and a constant longitudinal attitude target corresponding to said stabilized phase of flight,
**characterized in that**
the lift of said half-wings (11,11') is adjusted by acting on an aerodynamic means of said aircraft (1) in order that a collective pitch of said blades of said main rotor (3) is equal to said setpoint collective pitch.

2. Method according to claim 1,
**characterized in that** said lift of said half-wings (11,11') is adjusted when:
- the roll angle of said aircraft (1) is less than 10°,
- the forward speed *TAS* of said aircraft (1) is greater than 50 kts, and
- no action is detected on the controls of said aircraft (1).

3. Method according to any one of claims 1 to 2,
said aerodynamic means of said aircraft (1) comprising at least one movable flap (12,12') on each half-wing (11,11') and at least one system for manoeuvring said flaps (12,12'),
**characterized in that** a difference of lift between each half-wing (11,11') is determined in order to compensate for the effects of said main rotor (3) on said half-wings (11,11') and said lift of each half-wing (11,11') is adjusted by manoeuvring each flap (12,12') in different manners by acting on said system for manoeuvring said flaps (12,12') in order to obtain said difference of lift between each half-wing (11, 11').

4. Method according to any one of claims 1 to 2,
said aerodynamic means of said aircraft (1) comprising at least one movable flap (12,12') on each half-wing (11,11') and at least one system for manoeuvring said flaps (12,12'),
**characterized in that** the lift of each half-wing (11,11') is adjusted by manoeuvring each flap (12,12') in different manners by acting on said means for manoeuvring said flaps (12,12') in order that a lateral cyclic pitch of said blades of said main rotor (3) is equal to a setpoint lateral cyclic pitch.

5. Method according to any one of claims 1 to 2,
said aerodynamic means of said aircraft (1) comprising at least one movable flap (12,12') on each half-wing (11,11') and at least one system for manoeuvring said flaps (12,12'),
**characterized in that** the lift of each half-wing (11,11') is adjusted by manoeuvring each flap (12,12') in different manners by acting on said system for manoeuvring said flaps (12,12') in order that a lateral bending moment of a mast of said main rotor (3) is equal to a setpoint lateral bending moment.

6. Method according any one of claims 1 to 5,
**characterized in that** the lift of said horizontal stabilizer is (20) is adjusted by acting on a means for manoeuvring each movable surface in order that a longitudinal cyclic pitch of said blades of said main rotor (3) is equal to said setpoint longitudinal cyclic pitch while conserving a constant target longitudinal attitude of the aircraft (1) corresponding to said stabilized phase of flight.

7. Method according to any one of claims 1 to 5,
**characterized in that** the lift of said horizontal stabilizer (20) is adjusted by acting on a means for manoeuvring each movable surface (21,21') in order that a longitudinal bending moment of said mast of said main rotor (3) is equal to a setpoint longitudinal bending moment during said stabilized phase of flight.

8. Method according to any one of claims 1 to 7,
each half-wing (11,11') comprising at least one movable flap (12, 12'),
**characterized in that** there are displayed on a display means (40) of said aircraft (1) pieces of information relating to the current values of said collective and cyclic pitches of said blades (31) of said main rotor (3) as well as to said setpoint collective pitch and to said setpoint longitudinal and lateral cyclic pitches, at least one piece of information relating to said flaps (12,12') and at least one piece of information relating to said horizontal stabilizer (20).
